Europäisches Patentamt

European Patent Office

Office européen des brevets

(19)

(11) Veröffentlichungsnummer: **0 239 748**

**A2**

(12) # EUROPÄISCHE PATENTANMELDUNG

(21) Anmeldenummer: **87101517.8**

(22) Anmeldetag: **04.02.87**

(51) Int. Cl.4: **B60B 15/26 , B60C 27/04**

(30) Priorität: **04.02.86 DE 3603325**
**11.04.86 DE 3612245**

(43) Veröffentlichungstag der Anmeldung:
**07.10.87 Patentblatt 87/41**

(84) Benannte Vertragsstaaten:
**AT CH DE FR IT LI SE**

(71) Anmelder: **Reiber, Konrad**
**Eurishofen 16**
**D-8939 Jengen(DE)**

(72) Erfinder: **Reiber, Konrad**
**Eurishofen 16**
**D-8939 Jengen(DE)**

(74) Vertreter: **Bockhorni, Josef, Dipl.-Ing. et al**
**Plinganserstrasse 18a Postfach 70 02 09**
**D-8000 München 70(DE)**

(54) **Vorrichtung zur Verbesserung des Fahrverhaltens von Fahrzeugen auf insbesondere glatten oder schneebedeckten Fahrbahnen.**

(57) Bei einer Vorrichtung zur Verbesserung des Fahrverhaltens von Fahrzeugen auf insbesondere glatten oder schneebedeckten Fahrbahnen ist mindestens einem Laufrad des Fahrzeuges ein Zusatzrad in Art eines Radringes oder Radscheibe zugeordnet, welches relativ zum Fahrzeugrad auf die Fahrbahn absenkbar ist oder radial ausfahrbare Segmente aufweist. Die Kontaktfläche des Zusatzrades mit der Fahrbahn ist so ausgebildet, daß ein erhöhtes Griffverhalten gewährleistet wird.

Fig 3

EP 0 239 748 A2

## Vorrichtung zur Verbesserung des Fahrverhaltens von Fahrzeugen auf insbesondere glatten oder - schneebedeckten Fahrbahnen.

Die Erfindung bezieht sich auf eine Vorrichtung zur Verbesserung des Fahrverhaltens von Fahrzeugen auf insbesondere glatten oder - schneebedeckten Fahrbahnen.

Bekanntlich ergeben sich unter winterlichen Bedingungen erhebliche Gefahren für den Straßenverkehr aufgrund glatter oder - schneebedeckter Fahrbahnen, was sich in einer erhöhten Zahl von Verkehrsunfällen mit Personen- und Sachschaden im Vergleich zu den Sommermonaten niederschlägt. Diesen Gefahren sucht man dadurch Rechnung zu tragen, daß die Fahrzeuge mit Winterreifen ausgerüstet werden, die sich von Sommerreifen durch ein ausgeprägteres Profil aber auch durch eine unterschiedliche, das Haftverhalten vergrößernde Gummimischung auszeichnen. Obgleich Winterreifen zweifelsohne das Fahrverhalten bei winterlichen Bedingungen verbessern, kann mit dem Einsatz solcher Reifen noch lange nicht die gewünschte Sicherung des winterlichen Fahrbetriebes erreicht werden. Aus diesem Grund hat sich in jüngster Zeit mehr und mehr der Trend nach allradbetriebenen Fahrzeugen durchgesetzt. Mit dem Allradantrieb ist jedoch ein erhöhter technischer Aufwand verbunden, der die Anfälligkeit der Fahrzeuge vergrößert und de Her- stellungskosten wesentlich verteuert. Das Brems- verhalten läßt sich mit einem Allradantrieb allerdings nur begrenzt verbessern. Eine Verbesserung des Bremsverhaltens ist hingegen durch den Einsatz von ABS-Systemen erreicht worden, die jedoch gleichfalls kostenaufwendig sind. Deren Vorteile sind jedoch alleine auf das Bremsverhalten beschränkt; ein Beitrag für den Antrieb selbst kann damit nicht geleistet werden.

Aufgabe der Erfindung ist es somit, eine Vorrichtung zu schaffen, die eine wesentliche Verbesserung des Fahrverhaltens auch unter extremsten Straßenverhältnissen, insbesondere glatten und - schneebedeckten Fahrbahnen, bringt.

Gelöst wird diese Aufgabe erfindungsgemäß durch die im Anspruch 1 enthaltenen Merkmale.

Zweckmäßige Weiterbildungen der Erfindung sind durch die in den Unteransprüchen enthaltenen Maßnahmen gekennzeichnet.

Die Erfindung zeichnet sich dadurch aus, daß dem normalen Fahrzeugrad ein Zusatzrad mit gegenüber dem Laufrad wesentlich geringerer Breite zugeordnet wird. Dieses Zusatzrad dient ausschließlich zur Anwendung im Notfall, also bei sehr extremen Straßenverhältnissen, also spiegelglatte Fahrbahn, Tiefschnee u. dgl., und kann folglich diesem speziellen Einsatzzweck entsprechend voll angepaßt sein, da ansonsten die Fahrt ausnahms- los mit den normalen Laufrädern durchgeführt wird.

Nach einer Alternative kann dieses Zusatzrad, welches unmittelbar benachbart dem normalen Laufrad angeordnet ist, gegenüber dem normalen Fahrzeugrad auf die Fahrbahn abgesenkt werden, so daß es entweder zugleich mit dem normalen Rad in Kontakt mit der Fahrbahn gelangt oder anstelle des normalen Fahrzeugrades, welches aufgrund des herabgesenkten Zusatzrades geringfügig vom Boden abgehoben wird. Nach einer weiteren besonders zweckmäßigen Alternative ist allerdings das Zusatzrad im Prinzip fest mit dem normalen Laufrad angeordnet, dreht also mit diesem, und sind über dem Umfang Segmente vorgesehen, die radial für den Notfall ausfahrbar sind. Die ausgefahrenen Segmente stehen dann im Kontakt mit der Fahrbahnfläche und zwar entweder zugleich mit dem normalen Fahrzeugrad oder insbesondere alleine, indem ähnlich wie vorher das normale Rad geringfügig, etwa 1 bis 3 cm vom Boden abgehoben wird. Die ausfahrbaren Segmente sind hin sichtlich ihrer Kontaktfläche mit der Fahrbahn geeignet ausgebildet, indem eine geeignete Materialmischung für gute Haftung, insbesondere Gummi- oder Kunststoffmischung, verwendet wird und/oder die Kontaktfläche entsprechend stark profiliert wird.

Das Zusatzrad kann losgelöst vom anderen Rad auf der Fahrzeugachse gelagert sein, wozu dann insbesondere das Zusatzrad als Radscheibe ausgebildet ist. Wird das Zusatzrad, was gleichfalls zweckmäßig ist, als Radring ausgebildet, so besteht die Möglichkeit, das Zusatzrad unmittelbar am normalen Laufrad, etwa an dessen Felge, zu befestigen.

Die Breite des Zusatzrades beträgt etwa 3 bis 10 cm und zwar insbesondere 5 bis 7 cm.

Ein weiterer Vorteil des insbesondere an der Innenseite des Fahrzeugrades angeordneten Zusatzrades besteht darin, daß es zugleich mit dem Fahrzeugrad lenkbar ist, was gleichfalls das Fahrverhalten begünstigt.

Das Zusatzrad kann gleich ausgebildete Segmente aufweisen oder aber verschiedene Gruppen von gleich aufgebauten Segmenten. In diesem Zusammenhang ist zweckmäßig, einen Teil der Segmente in Art eines Gummiblockes auszubilden und die andere Gruppe der Segmente mit einer ents- prechend starken Profilierung, insbesondere spike- sartigen Querrippen oder Spikes u. dgl.. Es kann dann entweder die eine Gruppe von Segmenten oder die andere Gruppe ausgefahren werden, was immer von den jeweiligen Straßenverhältnissen abhängig ist, oder nach einer weiteren Ausbildung sämtliche verschiedene Segmente zugleich.

Die Ausfahrbarkeit der Segmente kann in geeigneter Weise bewerkstelligt werden, etwa pneumatisch, hydraulisch oder durch einen Elektromotor oder in sonst einer mechanischen Weise, etwa Planetengetriebe, welches durch die verzögerte Drehung des Rades beim Bremsen selbst angetrieben wird und über eine Spindel das Ausfahren der Segmente bewerkstelligt.

Nachfolgend werden Ausführungsbeispiele der Erfindung anhand der Zeichnung beschrieben. Darin zeigen

Fig. 1 eine perspektivische Ansicht eines Kraftfahrzeuges in schematischer Darstellung,

Fig. 2 eine perspektivische Ansicht eines Teiles eines Kraftfahrzeuges,

Fig. 3 eine perspektivische Ansicht des in Fig. 2 dargestellten Kraftfahrzeuges, jedoch in einer anderen Betriebsstellung,

Fig. 4 eine Teilansicht eines Radringes zur Darstellung ausfahrbarer Segmente (in Seitenansicht) sowie

Fig. 5 eine analoge Teilansicht wie in Fig. 4, jedoch von einer anderen Ausführungsform.

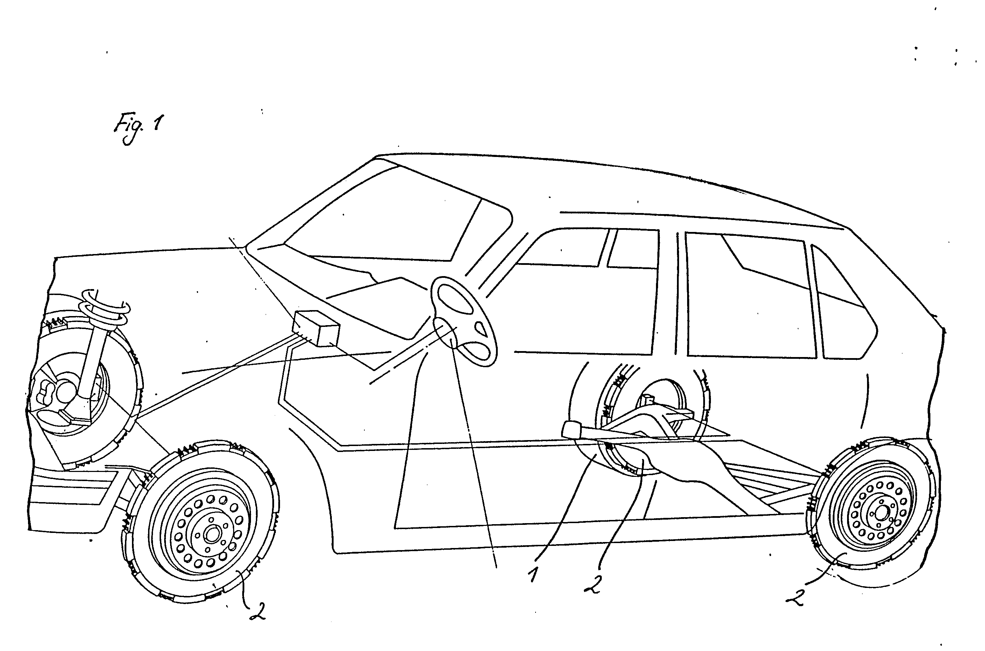

In Fig. 1 ist nur schematisch ein Personenkraftfahrzeug dargestellt, an dessen vier Laufräder 1 jeweils ein Zusatzrad in Art eines Radringes oder Radscheibe 2 angeordnet ist. Dabei ist jedem Laufrad 1 eine Radscheibe bzw. Radring 2 zugeordnet. Obgleich im dargestellten Ausführungsbeispiel jedem Laufrad 1 ein Zusatzrad zugeordnet ist und zwar jeweils an der Innenseite des Laufrades 1, so ist dies nur beispielhaft, da bei anderen Ausführungsformen den Rädern einer Achse, also Vorderoder Hinterachse jeweils ein Zusatzrad zugeordnet sein kann. In besonderen Anwendungsfällen genügt auch die Zuordnung von nur einem Zusatzrad, wobei dies allerdings einem der unmittelbar angetriebenen Laufräder zugeordnet ist.

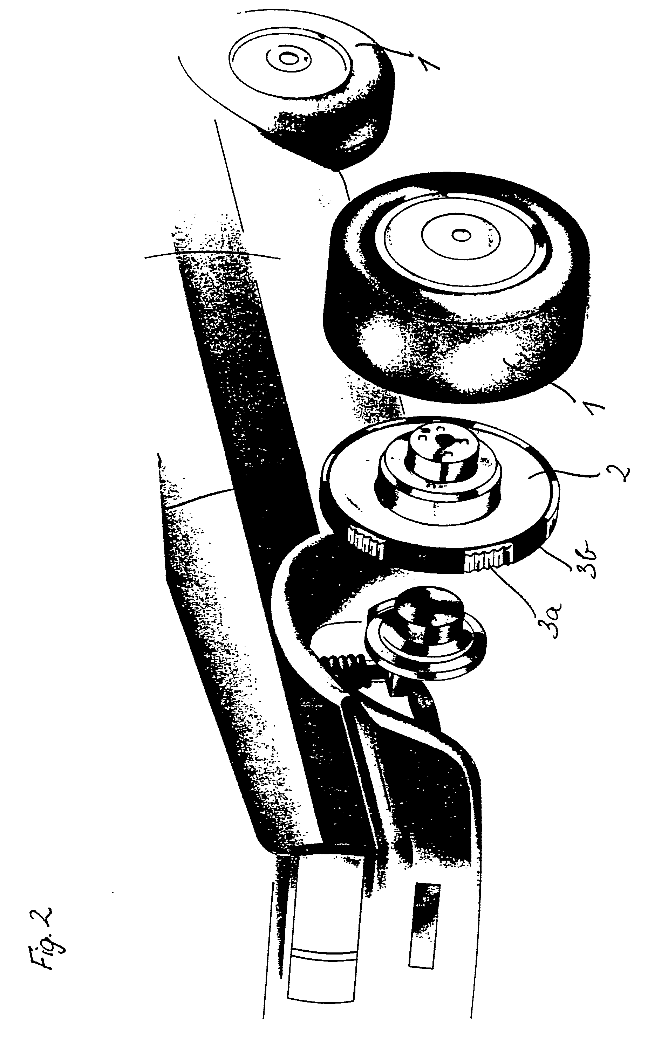

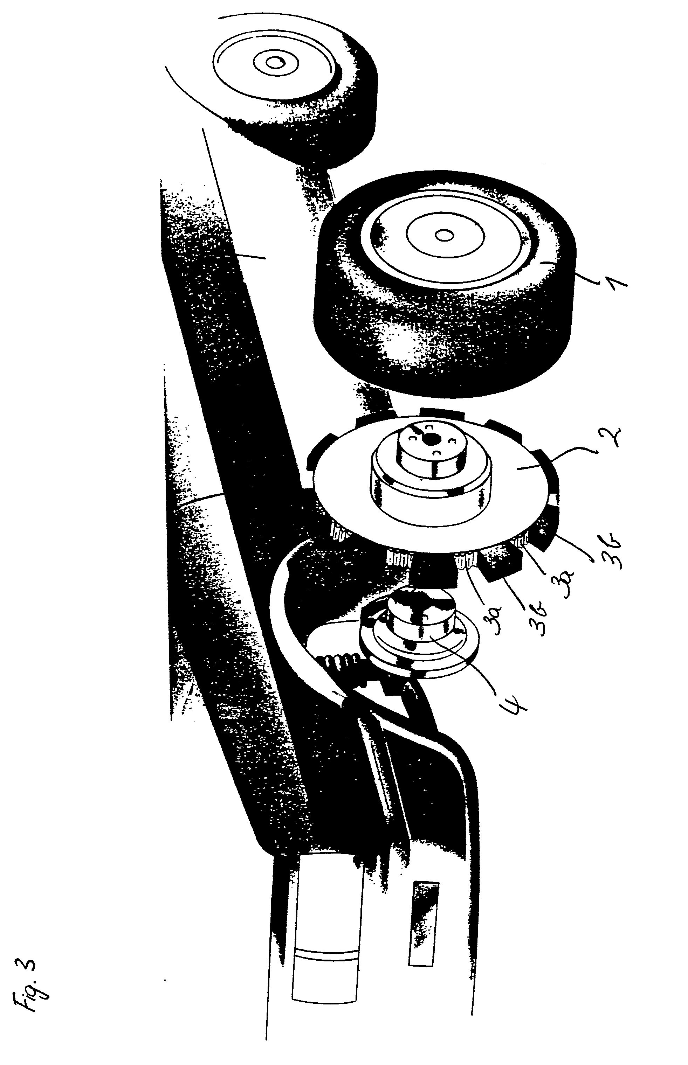

Jede Radscheibe 2 weist über den Umfang eine Anzahl von Segmenten auf, die radial ausfahrbar und einfahrbar sind. Diese radial verfahrbaren Segmente ergeben sich am deutlichsten aus den Fig. 2 und 3. Fig. 2 zeigt eine Radscheibenstellung, in der die ausfahrbaren Segmente 3a, 3b sich in ihrer eingefahrenen Position befinden. In dieser Stellung steht die Radscheibe 2 nicht über die Lauffläche des zugeordneten Laufrades 1 vor sondern ist vielmehr radial gesehen soweit zurückliegend angeordnet, daß auch bei Fahrten auf unebenen Gelände, wie etwa Feldwegen u. dgl., die Radscheibe 2 bzw. deren Umfang nicht in Kontakt mit der Fahrbahn gelangt. Erst in der ausgefahrenen Stellung, die in Fig. 3 dargestellt ist, übernehmen die ausgefahrenen Segmente, hier die Segmente 3b, den Kontakt mit der Fahrbahn. Dabei sind zweckmäßigerweise die Segmente soweit radial ausgefahren, daß sie alleine den Kontakt mit der Fahrbahn herstellen und insoweit das Laufrad 1 entsprechend weit vom Boden abgehoben ist. Da, wie die Fig. 1 bis 3 zeigen, die Breite der Zusatzräder sehr viel schmäler als die der Laufräder 1 ist, ergibt sich in der ausgefahrenen Stellung der Segmente ein gutes Griffverhalten mit der Fahrbahn, so daß bei glatter oder schneebedeckter Fahrbahn ein einwandfreier Antrieb und ein sicheres Fahrverhalten gewährleistet ist.

Entsprechend sind auch die radial ausfahrbaren Segmente 3a und 3b ausgebildet. Bei der Ausführungsform nach den Fig. 2 und 3 sind zwei verschiedene radial verfahrbare Segmente 3a und 3b vorgesehen. Das Segment 3b weist an seinem Außenabschnitt im wesentlichen einen Block aus einem geeigneten Gummi oder Kunststoff mit gutem Haftvermögen auf. Die Kontaktfläche des Blockes mit der Fahrbahn kann hierbei je nach Bedarf lecht profiliert sein. Zwischen diesen mit Umfangsabstand zueinander angeordneten Segmenten 3b sind die Segmente 3a angeordnet, deren Außenabschnitte anders ausgestaltet ist. Im dargestellten Ausführungsbeispiel weisen die Segmente 3a eine ausgeprägte Profilierung in Form von Querrippen auf. Dabei können je nach Bedarf entweder die Segmente 3b oder die Segmente 3a, je nach Zustand der Fahrbahndecke, ausgefahren werden. Es ist aber auch möglich, daß sämtliche Segmente 3a und 3b zugleich ausgefahren werden. Bei der Ausführungsform nach den Fig. 2 und 3 eignen sich die Segmente 3b insbesondere bei Fahrten auf spiegelglatten Fahrbahnen, da das Material des Außenabschnittes der Segmente 3b aus einem Gummi oder Kunststoff mit gutem Haftvermögen hergestellt ist. Hingegen eignen sich die Segmente 3a insbesondere für Fahrten auf schneebedeckten Fahrbahnen oder auch Tiefschnee. Aufgrund der geringen Breite dieser Segmente ergibt sich ein optimales Fahrverhalten auf glatten oder -schneebedeckten Fahrbahnen oder Gelände.

Das innenseitig angeordnete Zusatzrad 2 ist ebenso wie das Laufrad 1 auf der zugehörigen Achse gelagert, und zwar im dargestellten Ausführungsbeispiel nach Fig. 3 über der Bremstrommel 4. Es wird zugleich mit dem Laufrad 1 über konventionelle Radmutterbefestigungen fahrzeugseitig befestigt. Im Falle eines Radringes ist es auch möglich, das Zusatzrad mittelbar über die Radfelge oder Radnabe des Laufrades 1 zu befestigen. Diese Ausführungsform eignet sich insbesondere für eine Nachrüstung von Fahrzeugen.

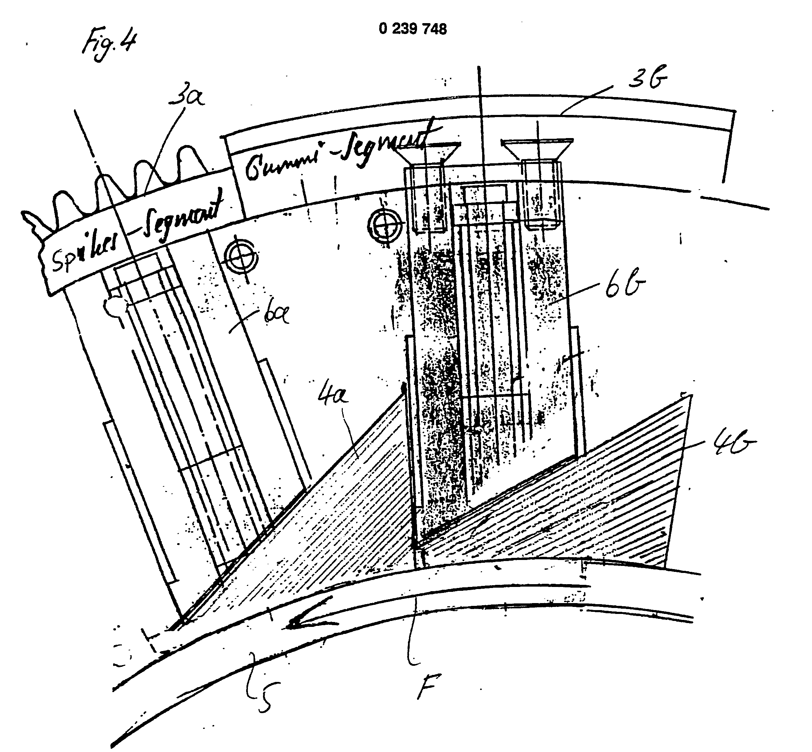

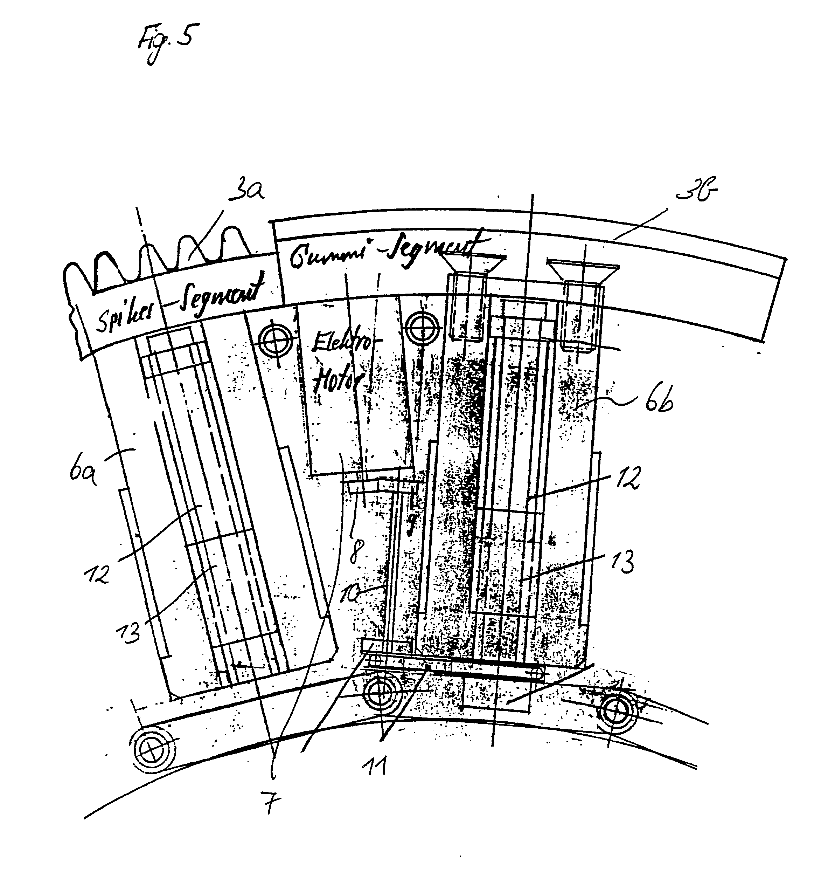

Das Ausfahren und Einfahren der Segmente 3a und 3b kann in jeder geeigneten Weise erfolgen, beispielsweise pneumatisch, hydraulisch, mechanisch oder einem elektrischen Antriebsmotor. Dies wird lediglich beispielhaft anhand der Fig. 4 und 5 erläutert, in denen im wesentlichen zwei radial verfahrbare Segmente 3a und 3b dargestellt sind. Im einzelnen handelt es sich wiederum entsprechend den Fig. 2 bis 3 um ein Gummisegment 3b und ein spikeartiges Segment 3a. Die Spikes können hierbei entweder durch entsprechend versteifte Gummistollen oder aber auch durch Stahlrippen od. dgl. hergestellt sein. Die radiale Ausfahrbarkeit wird durch Keile 4a und 4b bewirkt. Sollen die Segmente 3a und 3b nur zugleich ausgefahren werden, so sind diese Keile 4a und 4b auf einem Ringband 5 befestigt. Wird dies in Pfeilrichtung F um die entsprechende Achse bewegt, so werden die Keile 4a und 4b und die mit entsprechenden Schrägflächen ausgerüsteten Stempel 6a und 6b bewegt, wodurch diese und damit die daran geeignet befestigten Segmente 3a und 3b radial ausgefahren werden. Soll diese Betriebsstellung aufgehoben werden, so wird das Ringband in entgegengesetzter Richtung bewegt und damit die Keile 4a und 4b, so daß bei der Weiterfahrt die radial ausgefahrenen Segmente und Stempel wieder nach innen gedrückt werden. Geeignete Rasten sorgen dann dafür, daß die Segmente bzw. Stempel in der eingefahrenen Stellung verbleiben. In dieser eingefahrenen Stellung befinden sich dann nurmehr in konventioneller Weise die Laufräder 1 in Kontakt mit der Fahrbahn. Soll bei der Ausführungsform nach Fig. 4 ein wahlweises Ausfahren der Segmente 3a und 3b ermöglicht sein, so sind zweckmäßigerweise zwei Ringbänder 5 vorgesehen, von denen eines die Keile 4a und das andere die Keile 4b trägt. Je nachdem, welches Ringband in Umfangsrichtung bewegt wird, ergibt sich dann das entsprechende Ausfahren der Segmente 3a oder 3b. Werden beide Ringbänder 5 bewegt, so werden die beiden Gruppen von Segmente 3a und 3b gleichzeitig ausgefahren.

Bei der Ausführungsform nach Fig. 5 erfolgt das Ausfahren mittels eines Elektromotors 7, an dessen Ausgangswelle sich eine Ritzel 8 befindet, welches mit einem weiteren Ritzel 9 auf einer Antriebsstange 10 kämmt, worüber ein Rundriemenantrieb 11 angetrieben wird, der auf eine Spindel 12 einwirkt, deren Drehung über eine mit der Spindel zusammenwirkende Mutter 13 das Ausfahren der entsprechenden Stempel 6a oder 6b bewirkt.

**Ansprüche**

1. Vorrichtung zur Verbesserung des Fahrverhaltens von Fahrzeugen auf insbesondere glatten oder schneebedeckten Fahrbahnen,

**gekennzeichnet** durch mindestens ein einem Rad (1) des Fahrzeuges zugeordnetes Zusatzrad (2) mit gegenüber dem Laufrad (1) wesentlich geringerer Breite, das relativ zum Fahrzeugrad auf die Fahrbahn absenkbar ist oder radial ausfahrbare Segmente (3a, 3b) aufweist sowie an seiner Kontaktfläche mit der Fahrbahn eine das Griffverhalten erhöhende Ausbildung aufweist.

2. Vorrichtung nach Anspruch 1, dadurch **gekennzeichnet**, daß das Zusatzrad (2) durch einen Radring oder eine Radscheibe gebildet ist.

3. Vorrichtung nach Anspruch 1 oder 2, dadurch **gekennzeichnet**, daß das Zusatzrad (2) eine Breite von 3 bis 10 cm, insbesondere 5 bis 7 cm aufweist.

4. Vorrichtung nach einem der vorhergehenden Ansprüche, dadurch **gekennzeichnet**, daß das Zusatzrad (2) auf der Innenseite am oder unmittelbar benachbart des Rades (1) angeordnet ist.

5. Vorrichtung nach einem der vorhergehenden Anspruche, dadurch **gekennzeichnet**, daß mindestens die Räder (1) einer Fahrzeugachse (Voroder Hinterachse) jeweils ein Zusatzrad (2) aufweisen.

6. Vorrichtung nach einem der vorhergehenden Ansprüche, dadurch **gekennzeichnet**, daß das Zusatzrad konzentrisch und/oder koaxial bezüglich des entsprechenden Fahrzeugrades (1) angeordnet ist.

7. Vorrichtung nach einem der vorhergehenden Ansprüche, dadurch **gekennzeichnet**, daß das Zusatzrad (2) drehfest mit dem Fahrzeugrad (1) verbunden ist.

8. Vorrichtung nach einem der vorhergehenden Ansprüche, dadurch **gekennzeichnet**, daß die ausfahrbaren Segmente (3a, 3b) über dem Umfang des Zusatzrades (2) mit Abstand zueinander oder unmittelbar angrenzend zueinander angeordnet sind.

9. Vorrichtung nach Anspruch 1 oder 8, dadurch **gekennzeichnet**, daß die Segmente (3a, 3b) des Zusatzrades (2) die gleiche das Griffverhalten erhöhende Ausbildung aufweisen.

10. Vorrichtung nach Anspruch 1 oder 8, dadurch **gekennzeichnet**, daß die Segmente (3a, 3b) eines Zusatzrades (2) gruppenweise die gleiche, das Griffverhalten verbessernde Ausbildung aufweisen.

11. Vorrichtung nach einem der Ansprüche 9 oder 10,
dadurch **gekennzeichnet,**
daß die Ausbildung durch eine profilierte Fläche, Spikes oder einen reibungserhöhenden Belag oder Schicht gebildet ist.

12. Vorrichtung nach Anspruch 11,
dadurch **gekennzeichnet** ,
daß das Profil der Kontaktfläche durch querverlaufende Rippen aus Gummi oder steifem Material gebildet ist.

13. Vorrichtung nach Anspruch 1, 8 bis 12,
dadurch **gekennzeichnet** ,
daß die Segmente (3a, 3b) aus Kunststoff oder Gummi gebildet oder mit einem Außenbelag aus Kunststoff oder Gummi versehen sind.

14. Vorrichtung nach einem der vorhergehenden Ansprüche,
dadurch **gekennzeichnet,**
daß die Segmente hydraulisch, mechanisch, pneumatisch oder durch Elektromotor ausfahrbar und/oder einfahrbar sind.

Fig. 1

Fig. 2

0 239 748

3a

3b

2

1

1

Fig. 3

0 239 748

Fig. 4

0 239 748

3a  3G

Gummi-Segment

Spikes-Segment

6a  6G

4a  4G

S  F

**Fig. 5**